# EUROPEAN PATENT SPECIFICATION

(11) **EP 2 504 602 B1**
(45) Date of publication and mention of the grant of the patent: **06.11.2013**
(21) Application number: 10807480.8
(22) Date of filing: 22.11.2010
(51) Int. Cl.: F16D 65/14, F16D 59/02

(54) **A MAGNETIC BRAKING DEVICE**
MAGNETISCHE BREMSVORRICHTUNG
DISPOSITIF DE FREINAGE MAGNÉTIQUE

(30) Priority: 24.11.2009 IT BO20090764
(43) Date of publication of application: 03.10.2012
(73) Proprietor: Muratori, Federica, 40127 Bologna (IT); Ungureanu, Ana, 72019 San Vito Dei Normanni (Brindisi) (IT)
(72) Inventor: Muratori, Federica, 40127 Bologna (IT); Ungureanu, Ana, 72019 San Vito Dei Normanni (Brindisi) (IT)
(74) Representative: Dall'Olio, Christian
(86) International application number: PCT/IB2010/055338
(87) International publication number: WO 2011/064713

(56) References cited:
- WO-A1-2010/005485
- AT-B- 187 356
- DE-A1- 1 911 717
- DE-A1- 2 821 973
- DE-B- 1 075 903

## Description

### FIELD OF THE INVENTION

The present invention relates to the technical sector concerning mechanically-acting braking devices.

### DESCRIPTION OF THE PRIOR ART

Electro-magnetic brakes are known which comprise a brake disc, keyed to the shaft of an electric motor, an electromagnet activated by an electric command circuit, and a mobile anchor subjected to elastic organs tending to maintain it pressed against the brake disc.

During normal functioning of the motor, the electric command circuit excites the electromagnet which attracts the mobile anchor, enabling the brake disc keyed on the shaft to rotate freely.

In the absence of supply from the electric command circuit, the electromagnet is de-excited and the mobile anchor is maintained pressed against the brake disc, exerting the desired function of braking the shaft.

This technical solution is extremely complex and characterised by a relatively high cost.

To this can be added the fact that the potentialities of the electromagnetic brakes are generously over-dimensioned if account is taken of some uses which do not require dynatic safety braking or sustaining of loads, but only a stationary or dynamic braking of no great intensity.

This type of electromagnetic brake exhibits axial dimensions that are not insignificant, and requires the realising of a drive shaft and.a protection cap that are longer with respect to a standard motor.

The electromagnetic brake also has to be fixed to the motor casing by fastening screws and it generally requires the regulating of both the braking torque and the air gap between mobile anchor and magnet body.

Also relevant are the problems connected to the electric supply of the command circuit of the electromagnet, which leads to a considerable consumption of energy, apart from the need to provide complex cabling and the necessary precautions against risks of an electrical nature.

The electromagnetic brake is also subject to specific norms and directives, such as the Low Voltage Directive, and in the case of DC coils, also the Electromagnetic Compatibility Directive due to the generating of disturbances of an electromagnetic nature deriving from the use of AC/DC supply units for the coil of the brake.

### SUMMARY OF THE INVENTION

The aim of the present invention is to provide a magnetic braking device able to activate and/or deactivate without any need for an electric command circuit and corresponding electric cabling.

A further aim of the present invention consists in providing a magnetic braking device having dimensions and costs which are relatively contained, though still providing a better performance than the solutions in the prior art.

To this can be added the desire to provide a magnetic braking device which provides high standards of reliability in all functioning conditions, at the same time while ensuring easy stages of installation and maintenance.

The above aims are obtained by means of a magnetic braking device, of a type associated to a drive shaft of a motor, according to claim 1.

### BRIEF DESCRIPTION OF THE DRAWINGS

The characteristics of the invention will emerge from the following, in which some preferred though not exclusive embodiments are described, with reference to the accompanying tables of drawings, in which:
figures 1 and 2 schematically illustrate two lateral views in partial axial section of a first embodiment of the proposed magnetic braking device in respective operating and non-operating configurations;
figure 3 is a view along section A-A indicated in figure 1;
figure 4 is a view along section B-B indicated in figure 2;
figures 5 and 6 are two schematic lateral views in partial axis section of a second embodiment of the proposed magnetic braking device in respective operating and non-operating configurations.

### DESCRIPTION OF THE PREFERRED EMBODIMENTS

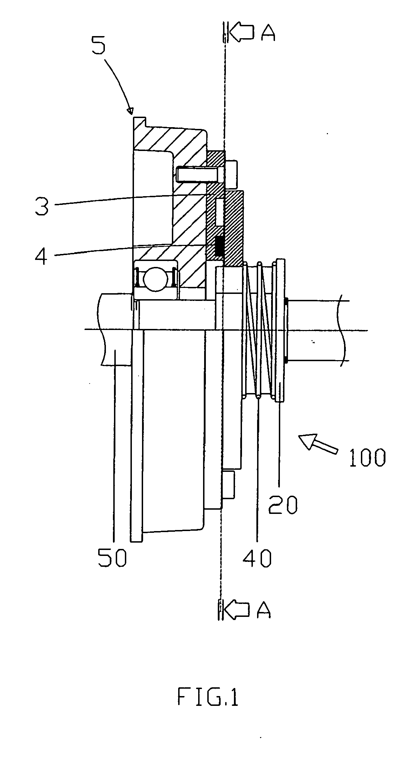

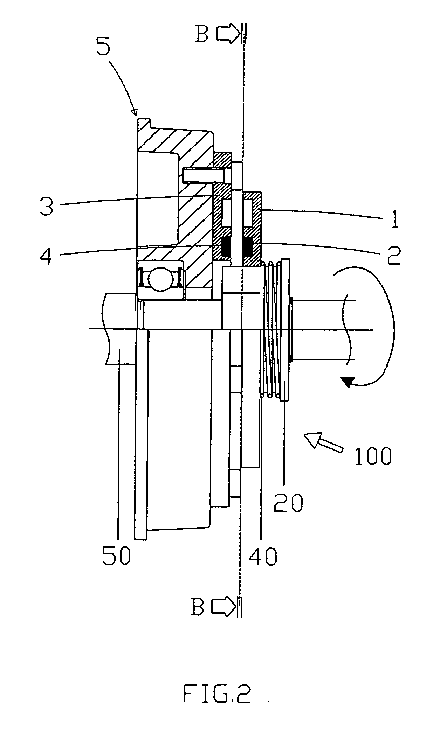

With reference to the accompanying tables of drawings, 100 denotes the magnetic braking device of the invention, of a type associated to the drive shaft 50 of a motor 5, comprising: at least a first metal disc 1 mounted slidably on the drive shaft 50 and provided with at least a series of first peripheral seatings 2a arranged in a ring and destined to receive corresponding first permanent magnets 2 of predetermined polarity; at least a second metal disc 3 mounted fixed with respect to the motor 5 and provided with at least a series of second peripheral seatings 4a, arranged on a ring which is geometrically similar and facing the ring on which the first seatings 2a are positioned, destined to receive corresponding second permanent magnets 4 having the same polarity as the first magnets (figures 1 and 2).

In this way the braking regime of the shaft 50 is enabled by the magnetic attraction between the magnets (2, 4) and the discs (1, 3), which come into contact while maintaining the magnets (2, 4) offset, each of which faces the respective portion of disc 3, 1) interposed between successive peripheral seatings (4a, 2a).

The shaft 50 is able to enter into rotation if subjected to a drive torque which is greater than the sum of the resistant torque exerted by the load applied and the resultant braking torque exerted by the applied load and the resultant braking torque exerted by the first magnets 2 of the mobile disc 1 which are facing/offset with respect to the second magnets 4 of the fixed disc 3.

The proposed braking device 100 can optionally be provided with an elastic spring abutted by an abutment 20 associated to the shaft 50 and acting on the first sliding disc 1 in order to facilitate contact with the second fixed disc 3 and to reduce vibrations during rotation, in particular for arrangements in which the shaft 50 has a vertical axis.

In this case, the first disc 1 is able to translate axially with respect to the shaft 50, subjected to the elastic spring 40, in the region comprised between the abutment 20 and the second disc 3.

It is clear that in unloaded functioning of the motor 5, which is for example an electric motor, the load applied on the shaft 50 is nil and the drive torque must only overcome the braking torque deriving from the magnetic action exerted by the permanent magnets (2, 4).

The permanent magnets (2, 4) are preferably positioned at the facing sides of the corresponding discs (1, 3) and the peripheral seatings (2a, 4a) of the respective discs (1, 3) are arranged on circular rings.

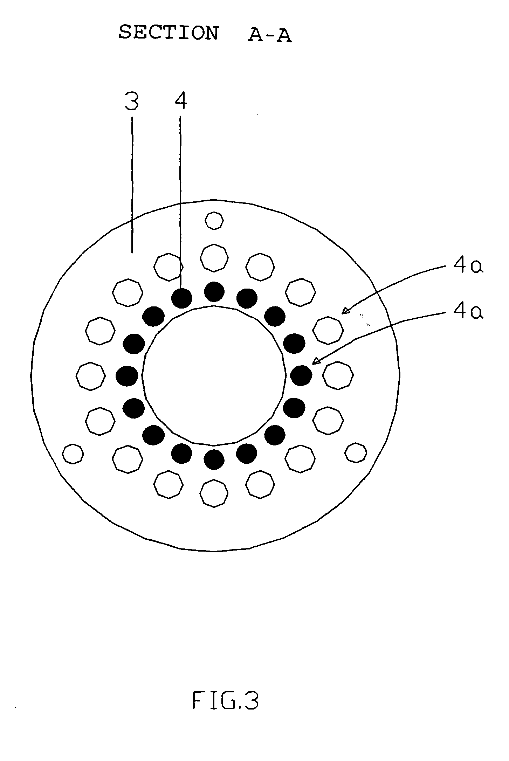

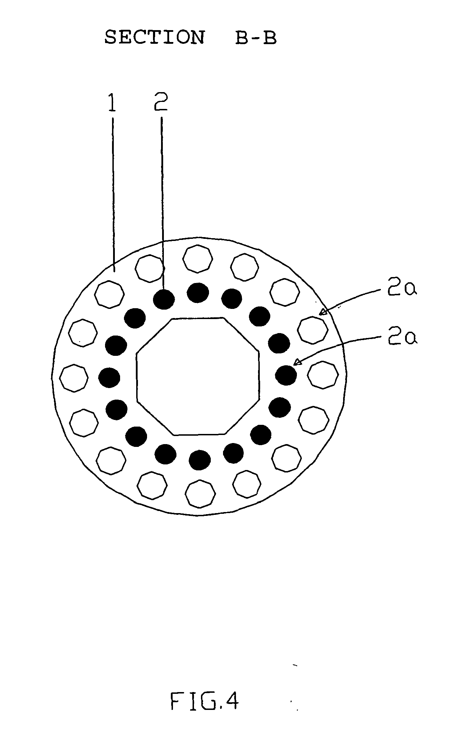

In a preferred embodiment, a plurality of first peripheral seatings 2a are comprised on the mobile disc 1, which first peripheral seatings 2a are arranged on concentric rings (for example two rings) having substantially similar diameters to the rings on which the plurality of the corresponding second peripheral seatings 4a on the fixed disc 3 are positioned (figures 3, 4).

In this way the braking action can be modulated according to the number and arrangement of the magnets (2, 4) specially provided in the respective seatings (2a, 4a).

The mobile disc 1 is advantageously geometrically coupled to the drive shaft 50 on which it runs.

Depending on technical specifications, the mobile disc 1 can geometrically couple and run on a sleeve keyed to the shaft 50 and provided with the abutment 20.

The elastic spring 40 is slidable coaxially on the shaft 50, keyed directly on the shaft 50 or the sleeve, if present.

To increase the braking action in static conditions, regions having a high friction coefficient can be provided on the facing sides of the discs (1, 3).

The functioning of the braking device 100 of the invention will be briefly set out in the following.

When the drive shaft 50 is stationary (non-operating blocking or braking condition, figure 1), the device 100 is in the condition in which the mobile disc 1 is coupled, by magnetic attraction force, to the fixed disc 3, the magnets (2, 4) of each disc (1, 3) being facing and attracted against the steel portion of the opposite disc (3, 1). In this condition the drive shaft 50 is stably braked as the modification of the state is obstructed by the force of the opposite magnets (2, 4) which, as they come to face each other with the same polarity, would tend to repel one another if an attempt is made to rotate the shaft.

When the drive shaft 50 is set in motion (unblocked operating condition, figure 2), there is an alternation of attraction when the magnets are facing the steel, and repulsion when the magnets are frontally opposite; in this dynamic condition, the dimension and reciprocal distance of the magnets are such that the attraction has not sufficient time to become complete and attract the discs of the two braking means as the successive repulsion intervenes immediately.

In this way an overall fluctuant/pulsating effect is achieved which enables rotation of the shaft 50 of the motor 5, as the repulsion action dynamically overcomes the attraction action.

Only when the shaft slows down in order to stop, for example in a case of absence of supply of the electric motor, will the attraction force exceed the repulsion force and the two discs clamp to one another and exert the braking action.

It is clear that the braking torque values and the detaching mode of the first disc 1 according to the operating conditions (for example velocity) can be modified, according to requirements, by acting on the size and reciprocal distance of the magnets.

The braking device 100 of the braking device, differently to known electromagnetic brakes, is advantageously deactivated by effect of the magnetic force of repulsion generated during the rotation of the shaft 50 of a rotating machine to which the device is applied.

It is further clear that the rotating machine starts with the brake on, but it immediately de-inserts in the instant after start-up.

The braking device 100, simple and economical since it is free of electromagnets, can be used in all applications characterised by high drive torques and low inertia in which a braking device is required (dynamic or stationary) with a braking torque that is lower than a difference between the drive torque and the resistant load.

In particular, the brake can be advantageously used as a dynamic brake in translation, where an electric braking is performed via an inverter and a following stationing by means of a brake, i.e. as a stationing brake in all those applications (for example motorisation composed of an electric motor and an endless screw reducer) in which a load is to be kept stationary when it has already been halted.

An example of a like application is the case of industrial doors, barriers, gate-openers and shutters in general, where as the service is intermittent the drive torques of the motors are very high in relation to the braking torque to be applied.

The braking device of the invention, differently to known electromagnetic brakes, is purely mechanical and does not therefore require energy supply or precautions against risks of an electrical nature, thus contributing to a saving in terms of cabling (no supply cable to the brake is required) and also in terms of energy consumption (eco-compatibility).

It is stressed that the device of the invention has extremely small dimensions in the axial direction and is provided with a secure, practical and rapid fastening system, which requires no regulating.

The braking device as described herein above can also be applied directly to the transmission organ downstream of the motor, for example on the double-projection of the fast shaft of an endless screw reducer, thus maintaining the motor completely unaltered.

The braking device 100 can also be provided with a single disc made of a metal material, preferably the fixed second disc 3, such as to realise the sliding first disc 1 in a different material, and thus obtain lower weight and inertia values.

In this case, in vertical shaft 50 arrangements the lower weight of the first disc 1 means that the elastic spring 40 can be dispensed with.

With two discs of a different nature, the second 3 being metal and the first 1 non-metal (for example plastic), when the drive shaft 50 is stationary the mobile first disc 1 is coupled by attractive magnetic force to the fixed disc 3 only by interaction of the first magnets 2 with the steel portion of the opposite second disc 3 (as the interaction of the second magnets 4 with the first disc 1 is absent); while when the drive shaft 50 is set in motion the repulsive action is maintained unaltered as it is due to the opposition of the magnets (2, 4) while the attractive force has only the contribution of the interaction of the first magnets 2 with the steel portion of the fixed and opposite second disc 3.

In this way the contribution of the attractive force is reduced, in order to advantageously reduce the amount of the fluctuant/pulsating/repelling effect during the phase of the rotation of the shaft 50.

In figures from 1 to 4 a first embodiment of the proposed braking device 100 is illustrated. The second disc 3 is fixedly mounted to the casing of the motor 5 and the first disc 1 is slidably mounted on the drive shaft 50.

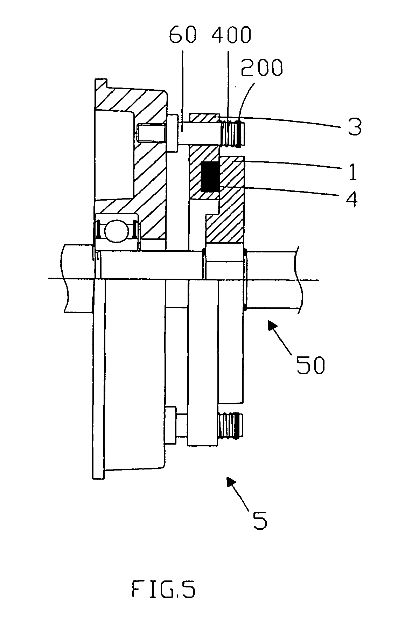

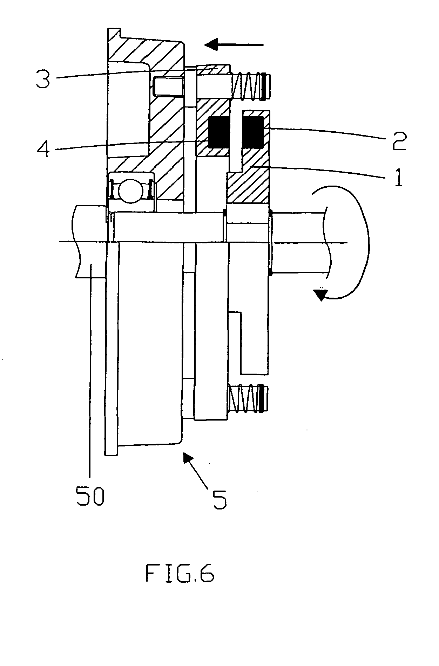

The same advantages as in the first embodiment can be found in the same way, by means of a second embodiment of the braking device 100 of the invention, in which the metal second disc 3 translates with respect to the casing of the motor 5, parallel to the drive shaft 50, nearingly/distancingly with respect to the metal first disc 1 which is keyed fixedly on the shaft 50 (figures 5, 6).

The second disc advantageously translates with respect to the first disc 1 with the aid of guide means associated to the motor casing 5, for example constituted by a plurality of pins 60 orientated parallel to the shaft 50 and destined to engage in corresponding through-seatings afforded in the second disc 3.

In the same way elastic springs 400 can be optionally comprised, keyed on the pins 60, which act on a side on the second disc 3 and on the other side are advantageously abutted by anutments200 provided at an end of the pins 6. In this case the elastic springs 400 attenuate the vibrations acting on the sliding second disc 3 and facilitate, in arrangements with the shaft 50 in vertical axis, the distancing of the second disc 3 from the first disc 1.

In this case too the braking device 100 can be provided with a single disc made of a metal material, preferably the fixed first disc 1, such as to realise the sliding second disc 3 in a different material (for example plastic) and thus obtain lower weight and inertia.

In this case, for vertical arrangements of the shaft 50 the lower weight of the first disc 1 enables preventing the positioning of the elastic springs 400.

In both realisations a disc (1, 3) is mobile with respect to the other (3, 1) in nearing/distancing in order to enable transit from the braking condition in which the discs (1, 3) are in contact by magnetic attraction, to the rotation condition in which the discs (1, 3) are maintained detached by the fluctuant/pulsating effect in which the repelling action dynamically overcomes the attractive action.

It is clear from the above how the magnetic braking device is able to activate and/or deactivate without any need for an electric command circuit and corresponding electric cabling.

It is without doubt distinguished by volumes and costs that are relatively contained, though at the same time delivery a superior performance in relation to the known technical solutions.

The magnetic braking device of the invention delivers high standards of reliability under all functioning conditions, ensuring at the same time easy installation and maintenance.

## Claims

1. A magnetic braking device, of a type associated to a drive shaft of a motor, ***characterized in that*** it comprises: at least a first disc (1) which is slidably or fixedly mounted on the drive shaft (50) and provided with at least a series of first peripheral seatings (2a) arranged in a ring, destined to receive first permanent magnets (2) of predetermined polarity: at least a second disc (3) which is respectively fixedly or slidably mounted with respect to a casing of the motor (5) and provided with at least a series of second peripheral seatings (4a), arranged on a ring geometrically similar to and facing the ring on which the first seatings (2a) are arranged, the second peripheral seatings (4) being destined to receive corresponding second permanent magnets (4) having the same polarity as the first magnets (2);
at least one of the discs (1, 3) being made of a metal material;
the discs (1, 3) going into reciprocal contact by dint of magnetic attraction exerted by at least steel portions of the metal disc (3, 1) which steel portions are interposed between successive peripheral seatings (4a, 2a) and which steel portions attract the respective magnets (2, 4) of the disc (1, 3) which attract the respective magnets (2, 4) of the opposite disc (1, 3) such as to enable establishing a braking condition of the shaft (50);
the shaft (50) being capable of entering into rotating condition if subjected to a drive torque that is greater than a sum of resistant torque exerted by an applied load and of a resulting braking torque exerted by the first magnets (2) of the first disc (1) facing/offset with respect to the second magnets (4) of the second disc (3) leading to an alternation of attraction between the discs (1, 3) when the portions of steel of the metal disc (3, 1) are facing the respective magnets (2, 4) of the opposite disc (1, 3), and an alternation of repulsion between the discs (1,3) when the magnets (2, 4) are frontally opposite, in this way producing an overall fluctuant/pulsating effect in which the repelling action dynamically overcomes the attracting action, enabling the discs (1, 3) to be maintained distanced.

2. The device according to claim 1, ***characterized in that*** the permanent magnets (2, 4) are arranged on facing sides of the respective discs (1, 3).

3. The device according to claim 1 or 2, ***characterized in that*** the peripheral seatings (2a, 4a) provided in the respective discs (1, 3) are arranged on circular rings.

4. The device according to any one of claims 1 to 3, ***characterized in that*** a plurality of first peripheral seatings (2a) is arranged on the first disc (1) on concentric rings having diameters substantially similar to the rings on which the plurality of the corresponding second peripheral seatings (4a) provided on the second disc (3) is arranged.

5. The device according to any one of claims 1 to 4, ***characterized in that*** the first disc (1) is geometrically coupled to the drive shaft (50).

6. The device according to any one of claims 1 to 5, ***characterized in that*** the facing sides of the discs (1, 3) are provided with regions having a high coefficient of friction.

7. The device according to any one of claims 1 to 6, ***characterized in that*** it comprises elastic organs (40, 400) abutted by means (20, 200) associated to the shaft (50), or to guide means (60) fixed to the motor (5) casing and acting on the sliding disc (1) in order to facilitate nearing or distancing thereof to/from the fixed disc (3), in particular for arrangements of the shaft (50) with a vertical axis.

8. The device according to claim 7, ***characterized in that*** the elastic organs (40) are coaxially slidable on the shaft (50).

9. The device of claim 7, **characterised in that** the guide means (60) comprise a plurality of pins (60) fixed to the motor (5) casing, orientated parallel to the shaft (50), destined to engage in corresponding through-seatings afforded in the sliding disc (3), with the elastic organs (400) slidable coaxially to the pins (60).

## Patentansprüche

1. Magnetische Bremsvorrichtung der Art, die mit der Antriebswelle eines Motors verbunden ist, **dadurch gekennzeichnet, dass** sie Folgendes beinhaltet: zumindest eine erste Scheibe (1), die verschiebbar oder unbeweglich auf der Antriebswelle (50) montiert ist und zumindest eine Reihe erster peripherer Aufnahmen (2a) aufweist, die in Form eines Ringes angeordnet und dazu bestimmt sind, erste Dauermagnete (2) vorbestimmter Polarität aufzunehmen; zumindest eine zweite Scheibe (3), die unbeweglich oder verschiebbar relativ zu einem Gehäuse des Motors (5) montiert ist und zumindest eine Reihe zweiter peripherer Aufnahmen (4a) aufweist, die in Form eines Ringes angeordnet sind, der geometrisch dem Ring ähnlich und zugewandt ist, auf dem die ersten Aufnahmen (2a) angeordnet sind, wobei die zweiten peripheren Aufnahmen (4a) dafür bestimmt sind, entsprechende zweite Dauermagnete (4) aufzunehmen, die dieselbe Polarität wie die ersten Magnete (2) aufweisen;
wobei zumindest eine der Seheiben (1, 3) aus metallischem Material hergestellt ist;
wobei die Scheiben (1, 3) mittels einer zumindest durch Stahlabschnitte der Metallscheibe (3, 1) ausgeübten magnetischen Anziehungskraft in gegenseitigen Kontakt zueinander treten, wobei diese Stahlabschnitte zwischen aufeinaderfolgenden peripheren Aufnahmen (4a, 2a) angeordnet sind und diese Stahlabschnitte die entsprechenden Magnete (2, 4) der Scheibe (1, 3) anziehen, welche die entsprechenden Magnete (2, 4) der gegenüberliegenden Scheibe (1, 3) anziehen, um die Herstellung eines Bremszustandes auf der Welle (50) zu ermöglichen;
wobei die Welle (50) in einen rotierenden Zustand versetzt werden kann, wenn sie einem Antriebsdrehmoment ausgesetzt wird, das größer ist als eine Summe aus einem Widerstandsdrehmoment, das von einer angelegten Last ausgeübt wird, und einem resultierenden Bremsdrehmoment, das durch die ersten Magnete (2) der ersten Scheibe (1) ausgeübt wird, die jeweils gegenüber bzw. versetzt zu den zweiten Magneten (4) der zweiten Scheibe (3) angeordnet sind, was zu einer wechselseitigen Anziehung zwischen den Scheiben (1, 3) führt, wenn die Stahlabschnitte der Metallscheibe (3, 1) den entsprechenden Magneten (2, 4) der gegenüberliegenden Scheibe (1, 3) gegenüber liegen, und zu einer wechselseitigen Abstoßung zwischen den Scheiben (1, 3), wenn die Magnete (2, 4) frontal einander gegenüberliegen, so dass eine insgesamt fluktuierende/pulsierende Wirkung erzeugt wird, in der die Abstoßungswirkung dynamisch die Anziehungswirkung überwindet, so dass die Scheiben (1, 3) voneinander beabstandet gehalten werden können.

2. Vorrichtung nach Anspruch 1, **dadurch gekennzeichnet, dass** die Dauermagnete (2, 4) auf einander gegenüberliegenden Seiten der entsprechenden Scheiben (1, 3) angeordnet sind.

3. Vorrichtung nach Anspruch 1 oder 2, **dadurch gekennzeichnet, dass** die peripheren Aufnahmen (2a, 4a) auf den entsprechenden Scheiben (1, 3) in kreisförmigen Ringen angeordnet sind.

4. Vorrichtung nach einem der Ansprüche von 1 bis 3, **dadurch gekennzeichnet, dass** mehrere der ersten peripheren Aufnahmen (2a) auf der ersten Scheibe (1) in konzentrischen Ringen angeordnet sind, deren Durchmesser im Wesentlichen ähnlich der Ringe ist, in denen die mehreren der entsprechenden zweiten peripheren Aufnahmen (4a) auf der zweiten Scheibe (3) angeordnet sind.

5. Vorrichtung nach einem der Ansprüche von 1 bis 4, **dadurch gekennzeichnet, dass** die erste Scheibe (1) geometrisch an die Antriebswelle (50) gekoppelt ist.

6. Vorrichtung nach einem der Ansprüche von 1 bis 5, **dadurch gekennzeichnet, dass** die einander zugewandten Seiten der Scheiben (1, 3) mit Bereichen versehen sind, die einen hohen Reibungskoeffizienten aufweisen.

7. Vorrichtung nach einem der Ansprüche von 1 bis 6, **dadurch gekennzeichnet, dass** sie federnde Organe (40, 400) beinhaltet, für die Anschlagmittel (20, 200) vorgesehen sind, die mit der Welle (50) oder mit am Gehäuse des Motors (5) befestigten Führungsmitteln (60) verbunden sind und auf die verschiebbare Scheibe (1) wirken, um deren Annäherung oder Entfernung an die bzw. von der unbeweglichen Scheibe (3) zu erleichtern, insbesondere bei Anordnung der Welle (50) mit einer vertikalen Achse.

8. Vorrichtung nach Anspruch 7, **dadurch gekennzeichnet, dass** die federnden Organe (40) koaxial auf der Welle (50) verschiebbar sind.

9. Vorrichtung nach Anspruch 7, **dadurch gekennzeichnet, dass** die Führungsmittel (60) mehrere Stifte (60) beinhalten, die an dem Gehäuse des Motors (5) befestigt, parallel zu der Welle (50) ausgerichtet sind und dafür vorgesehen sind, mit entsprechenden durchgehenden Aufnahmen in Eingriff zu treten, die in der verschiebbaren Scheibe (3) vorgesehen sind, wobei die federnden Organe (400) koaxial zu den Stiften (60) verschiebbar sind.

## Revendications

1. Un dispositif de freinage magnétique, d'un type associé à un arbre de transmission d'un moteur, **caractérisé en ce qu'**il comprend: au moins un premier disque (1) qui est monté de façon coulissante ou fixe sur l'arbre de transmission (50) et est doté d'au moins une série de premiers logements périphériques (2a) disposés en anneau, destinés à recevoir des premiers aimants permanents (2) de polarité prédéfinie ; au moins un deuxième disque (3) qui est respectivement monté de façon fixe ou coulissante par rapport à un boîtier du moteur (5) et est doté d'au moins une série de deuxièmes logements périphériques (4a), disposés sur un anneau géométriquement similaire à et faisant face à l'anneau sur lequel sont disposés les premiers logements (2a), les deuxièmes logements périphériques (4a) étant destinés à recevoir des deuxièmes aimants permanents (4) correspondants ayant la même polarité que les premiers aimants (2) ;
au moins l'un des disques (1, 3) étant réalisé dans un matériau métallique ;
les disques (1, 3) venant en contact réciproque par l'effet d'une attraction magnétique exercée par au moins des portions d'acier du disque métallique (3, 1), lesdites portions d'acier sont interposées entre des logements périphériques (4a, 2a) successifs et lesdites portions d'acier attirent les aimants (2, 4) respectifs du disque (1, 3) qui attirent les aimants (2, 4) respectifs du disque (1, 3) opposé de manière à permettre la détermination d'une condition de freinage de l'arbre (50) ;
l'arbre (50) pouvant entrer en régime de rotation s'il est soumis à un couple moteur qui est supérieur à la somme du couple résistant exercé par la charge appliquée et du couple de freinage résultant exercé par les premiers aimants (2) du premier disque (1) faisant face à/décalés par rapport aux deuxièmes aimants (4) du deuxième disque (3), donnant lieu à une alternance d'attraction entre les disques (1, 3) quand les portions d'acier du disque métallique (3, 1) sont face aux aimants (2, 4) respectifs du disque (1, 3) opposé, et une alternance de répulsion entre les disques (1, 3) quand les aimants (2, 4) sont frontalement opposés, générant ainsi un effet global fluctuant/pulsatoire où l'action de répulsion vainc dynamiquement l'action d'attraction, ce qui permet aux disques (1, 3) d'être maintenus espacés.

2. Le dispositif selon la revendication 1, **caractérisé en ce que** les aimants permanents (2, 4) sont disposés sur des côtés se faisant face des disques (1, 3) respectifs.

3. Le dispositif selon la revendication 1 ou 2, **caractérisé en ce que** les logements périphériques (2a, 4a) réalisés dans les disques (1, 3) respectifs sont disposés sur des anneaux circulaires.

4. Le dispositif selon l'une quelconque des revendications de 1 à 3, **caractérisé en ce qu'**une pluralité de premiers logements périphériques (2a) est disposée sur le premier disque (1) sur des anneaux concentriques ayant des diamètres essentiellement similaires aux anneaux sur lesquels est disposée la pluralité de deuxièmes logements périphériques (4a) correspondants réalisés sur le deuxième disque (3).

5. Le dispositif selon l'une quelconque des revendications de 1 à 4, **caractérisé en ce que** le premier disque (1) est géométriquement accouplé avec l'arbre de transmission (50).

6. Le dispositif selon l'une quelconque des revendications de 1 à 5, **caractérisé en ce que** les côtés se faisant face des disques (1, 3) sont dotés de zones ayant un haut coefficient de frottement.

7. Le dispositif selon l'une quelconque des revendications de 1 à 6, **caractérisé en ce qu'**il comprend des organes élastiques (40, 400) mis en butée par des moyens (20, 200) associés à l'arbre (50), ou à des moyens de guidage (60) fixé au boîtier du moteur (5) et agissant sur le disque coulissant (1) de manière à en favoriser le rapprochement ou l'éloignement du disque fixe (3), en particulier pour des dispositions de l'arbre (50) à axe vertical.

8. Le dispositif selon la revendication 7, **caractérisé en ce que** les organes élastiques (40) peuvent coulisser coaxialement sur l'arbre (50).

9. Le dispositif selon la revendication 7, **caractérisé en ce que** les moyens de guidage (60) comprennent une pluralité de goupilles (60) fixées au boîtier du moteur (5), orientées parallèlement à l'arbre (50), destinées à s'introduire dans des logements débouchants correspondants prévus dans le disque coulissant (3), avec les organes élastiques (400) pouvant coulisser coaxialement auxdites goupilles (60).
